# EUROPEAN PATENT SPECIFICATION

(11) **EP 2 384 527 B1**
(45) Date of publication and mention of the grant of the patent: **08.05.2019**
(21) Application number: 10704179.0
(22) Date of filing: 28.01.2010
(51) Int. Cl.: H02G 9/04, B60M 5/00

(54) **A COMBINED CABLE TROUGH AND WALKWAY**
KOMBINIERTES KABELKANAL UND LAUFPLAN
GOULOTTE ET TROTTOIR COMBINÉ

(30) Priority: 30.01.2009 GB 0901544
(43) Date of publication of application: 09.11.2011
(73) Proprietor: Trojan Services Limited, Manchester M2 2AS (GB)
(72) Inventor: WELLENS, Stewart, Manchester, Greater Manchester M2 2AS (GB)
(74) Representative: Appleyard Lees IP LLP
(86) International application number: PCT/GB2010/050134
(87) International publication number: WO 2010/086659

(56) References cited:
- WO-A1-94/21018
- WO-A1-98/47212
- US-A1- 2003 123 929
- US-B1- 6 698 977

## Description

The present invention concerns a combined cable trough and walkway for use primarily in a railway environment for routing and carrying communication and/or power cables and which also has a function as a safe level walkway beside a railway track.

Railway tracks are frequently laid on uneven ground which has been topped off with ballast, which is essentially rubble. When railway technicians and engineers are required to work on the railway, they often have to walk significant distances alongside the railway track over this ground. The unevenness of this ground poses a problem for the workers and makes it difficult to transport tools and equipment if there is no corresponding access roadway.

In the UK, Network Rail, the owners and operators of the rail infrastructure, have in place regulations that dictate certain requirements for provision of a safe and level walkway alongside railway tracks. Currently, such walkways tend to consist of flattened and compressed earth and are not generally suitable to transport tools and equipment.

At the same time, there is a requirement to provide routing for cables alongside railway tracks. These cables can be used for transmitting power around the railway network, or for signalling and communication purposes. Sometimes, third parties lease space in the routing system and make use of the extensive railway network to route their own communication cables around the country.

Accordingly, there is a need to provide a system for implementing walkways to run alongside railway tracks in a quick, easy and economic manner, which can be easily retrofitted to existing railway infrastructure.

WO98/47212A1 discloses a combined cable trough and walkway according to the preamble of the independent claim 1. Embodiments of the present invention aim to address problems in the prior art, and other problems whether mentioned explicitly herein or not.

According to the present invention there is provided an apparatus as set forth in the appended claims. Other features of the invention will be apparent from the dependent claims, and the description which follows.

For a better understanding of the invention, and to show how embodiments of the same may be carried into effect, reference will now be made, by way of example, to the accompanying diagrammatic drawings in which:
Figure 1 shows a perspective view of an example useful for understanding the invention;
Figure 2 shows an end view of an embodiment of the invention;
Figures 3a-c show perspective, bottom and top views, respectively, of a side wall component forming part of an embodiment of the present invention;
Figure 4a-c show perspective, bottom and end views, respectively, of an upright member forming part of an embodiment of the present invention; and
Figures 5a and 5b show perspective and top views, respectively, of a lid component forming part of an embodiment of the present invention.

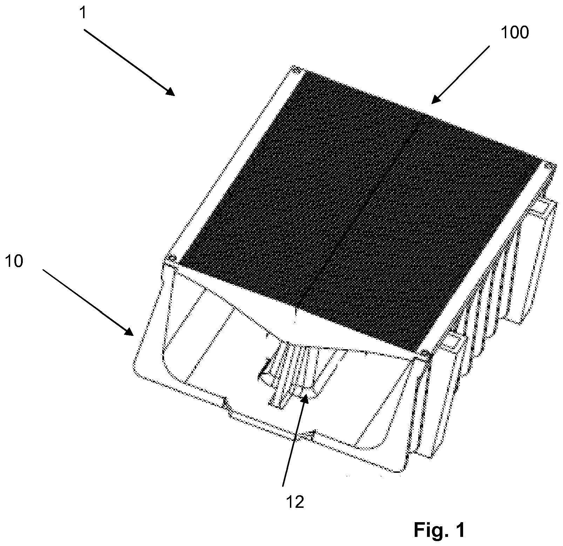

Figure 1 shows a perspective view of an assembly 1, comprising a trough 10 together with lid 100. The trough is arranged in use to be wholly or partially buried alongside a railway track. The trough is generally U-shaped and a plurality of such troughs are arranged end to end to carry cables associated with the railway system. These may be power cables, signalling cables, data communication cables or cables carried for third parties, such as fibre-optic data cables.

The cable trough component 10 is constructed from a plastics material. The plastics material comprises a polymer which is preferably recycled. In a preferred embodiment the preferred polymer is a polyolefin. The trough component 10 is preferably constructed using an injection moulding process.

The generally U-shaped channel formed by the trough is separated into a pair of sub channels by a central upright member 12, which extends from the base of the trough. The upright member 12 has two major functions. The first function is to divide the trough into two sections, which can assist with cable segregation and management (for instance, physically separating high voltage cables from data cables). The second function is to assist in supporting the lid/walkway, when it is in place.

The dimensions of the trough component may be selected as needed, but there is a standard applicable in at least the UK which dictates that a walkway provided at the side of a railway line must be at least 700mm wide. Preferred embodiments of the present invention meet this requirement.

In an example useful for understanding the invention, the trough 10 is formed as a single piece by injection moulding. Likewise, the lid 100 is formed as single piece. However, it is found, in practice, that the mould size required to make such a trough, can be excessive and can, in some cases, result in manufacturing problems in some instances.

Therefore, in an embodiment of the invention, the trough 10' is manufactured as three separate components which are assembled to provide a component which is functionally identical to the single piece component 10 of the first embodiment. Similarly, the lid/walkway 100' is manufactured as two separate components which are assembled into a lid/walkway which is functionally identical with the lid/walkway 100 of the first embodiment.

One advantage of forming the trough 10' from separate components is that the moulds required to make the components are smaller, more manageable and result in smaller parts which can be more easily packaged and transported. In addition, by careful design of the components, the number of different individual components can be minimised.

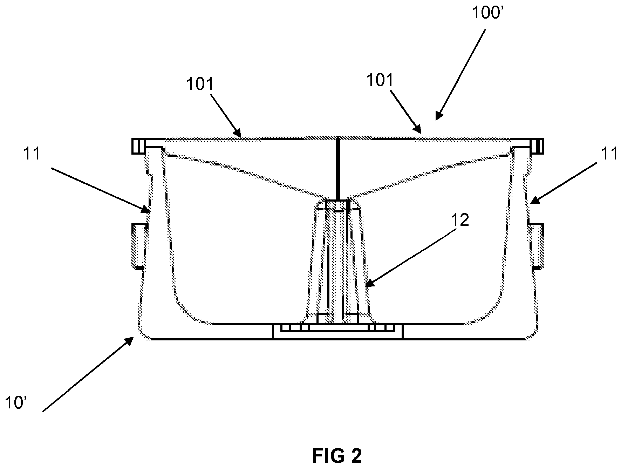

In Figure 2, it can be seen how the trough 10' is constructed from three separate components 11, 11 and 12, but note that the components 11 are identical. Each of the connectors which allow the components to inter-connect are arranged to have a male and female fitting for interconnection to a complementarily-gendered connector. The trough 10' shown in Figure 2 is functionally identical with the unitary trough 10 shown in Figure 1.

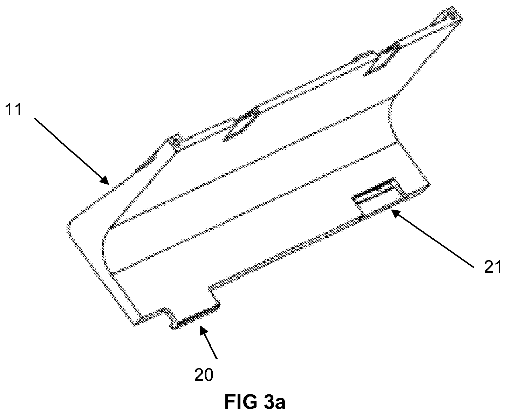

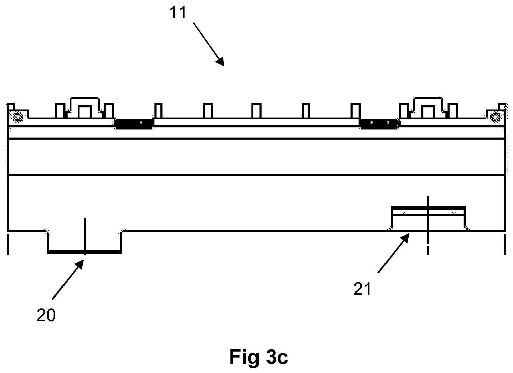

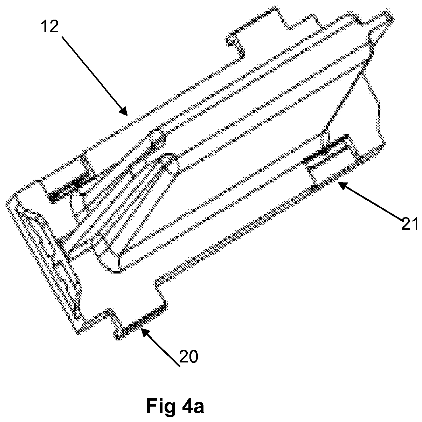

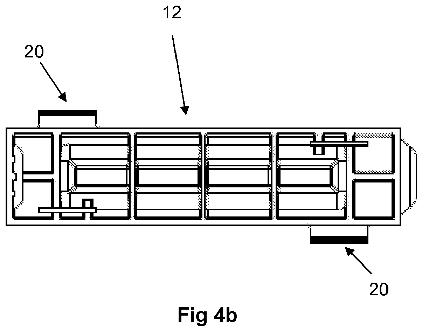

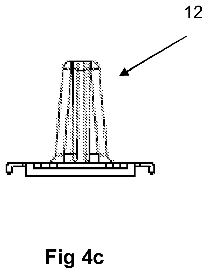

Figures 3a-3c show various views of the side wall component 11. Figures 4a-4c show various views of upright member 12.

Side wall component 11 has a male connector 20 towards its bottom, as viewed in Figure 3a and a female connector 21 towards its top. The upright portion 12, as shown in Figure 4a, has a male connector 20 adjacent the female connector 21 of the side wall member 11 and vice-versa. Finally, to complete the trough 10', the other side wall component 11 is identical with the first side wall component 11, but rotated through 180°, such that its male connector 20 is adjacent the female connector 21 of the upright member 12 and vice-versa.

In this way, only one type of side wall component 11 is required, regardless of whether it is to be configured as a left or a right hand side wall. This form of connection arrangement has a further advantage in that, for troughs which are required to be narrower, the side wall components 11 can be directly connected together, and a narrower lid can be fitted. In this case, there is no upright portion 12, and the narrower lid is able to adequately span the reduced width of this arrangement without requiring additional support.

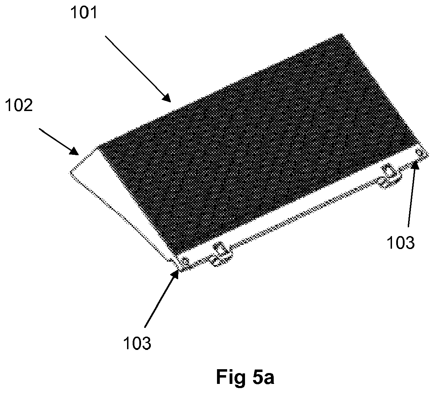

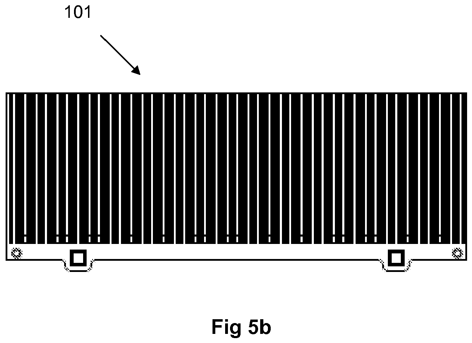

In the same way that the trough 10' can be constructed from a number of discrete smaller components, the lid 100' can be constructed from two identical, smaller, components 101. This is shown in Figure 5a. As with the side wall components, the components 101 which make up the lid/walkway 100' are identical and can be fitted either way round, requiring a minimal number of components to be manufactured and/or held in stock.

By manufacturing the individual components in this way, they can be much more easily manufactured, stored and transported before being assembled on-site.

To assemble the trough 10' from components 11 and 12, it is a simple matter of aligning the respective male 20 and female 21 connectors and pressing hard to snap the parts together. Once connected in this way, it is very difficult, but no impossible, to separate them. Various ways of ensuring a suitable permanent or semi-permanent (meaning that the parts will not ordinarily come apart in use but may be separated, perhaps by use of a special tool) connection are possible. For instance, a frictional fit can be employed whereby a slight taper is introduced to either the male or female part so that a tight fit is achieved between male and female parts respectively. Alternatively, some form of external fastening, such as a screw, nut and/or bolt, rivet or similar device may be used.

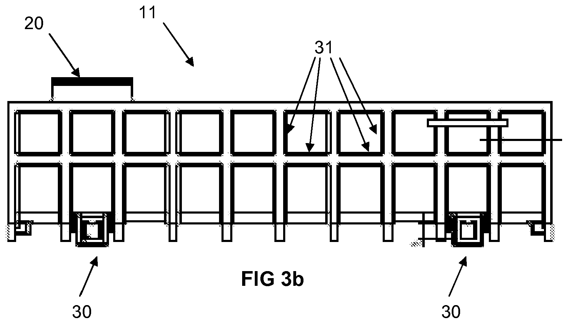

Turning to features of the components 11 and 12 which form the trough, it can be seen in Figure 3b that the side wall component is provided on its outer upright surface with a pair of apertures 30. These are provided so that a safety handrail can be added to the walkway if required. The safety handrail is not shown, but takes the form of a pair of vertical members spaced to fit in the pair of apertures and joined by a substantially horizontal member. Such a safety barrier may be used in certain track-working situations to shield workers from passing trains.

The side wall component 11 has a relatively smooth interior surface, to prevent or minimise cable-chafing. The exterior surface is provided with a range of horizontal and vertical ribs 31 for providing strength and added rigidity to the component. The recesses formed between the ribs helps keep the trough in position once the trench in which it is usually situated is backfilled with material.

The upright member 12 is dimensioned so that its height, once assembled into the trough 10' is slightly lower than the height of the two side walls. This is because the lid/walkway component 101 is provided with a range of buttress-like support ribs 102 which extend from a relatively thin end at the outer edge of the lid/walkway 100', to a relatively thick end at the centre of the lid/walkway. The reduced height of the upright member 12 is to compensate for the extra thickness of the lid/walkway at its central position. This ensures that the lid/walkway is substantially flat in use.

The lid/walkway 100' is provided with a textured upper exposed surface, so that an improved grip is provided for track workers who may have to walk on it in wet or icy conditions. The textured surface can take the form of parallel grooves or ridges, or any other suitable pattern.

The lid/walkway 100' is provided with means for securing it firmly in position once attached to the trough 10'. The means provided take the form of apertures positioned to align with corresponding apertures provided in the trough 10'. Fastening devices, such as screws or nuts, can then be used to close the trough 10' with the lid/walkway 100'. Preferably, anti-tamper fasteners are used so that a special tool is requires to remove them.

The lid/walkway 100' may, in some embodiments, be provided with reflective devices which serve to render the surface of the walkway more visible in reduced lighting conditions. Often, track maintenance is performed overnight, to minimise disruption to rail timetables. As such, the trackworkers often work using head-mounted torches. By providing reflective elements, preferably along the edges of the walkway, it is easier for them to discern the limits of the walkway and so remain safely away from the railway track. The reflective elements can be positioned in the mould so that they become incorporated during the moulding process.

The lid/walkway 100' can be provided with a slightly bowed surface to facilitate the draining of any rainwater which may otherwise collect on the surface. Similarly, an incline can be formed in one or both of the sub-channels so that water tends to run towards an end of the trough where it may escape to earth at the junction between adjoining troughs.

The base of the trough 10' can optionally be provided with one or more cable cleats to securely fasten the cables therein in position. This can assist in cable segregation and also in cable security. There is a growing problem of thieves stealing copper cabling from trackside installations. If the individual cables are fastened in place in each trough 10', then it becomes much more difficult to remove the cables.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The scope of the invention is defined by the appended claims.

## Claims

1. A combined cable trough and walkway (1) comprising:
a first component (10') for carrying cables, said first component having a channel formed from a base and two generally upright sidewalls (11) extending therefrom, wherein said channel is divided into two sub-channels by a generally upright member (12) extending from the base; and
a second component (100'), arranged in use, to form a lid to cover the first component and to provide a walkway, wherein the upright member (12) is arranged, in use, to support the second component (100') **characterised in that** the first component comprises separate first and second identical sidewall members (11) and an upright member (12), and **in that** the first and second sidewall members are arranged to be fitted to either side of the upright member before use.

2. The combined trough and walkway as claimed in any preceding claim wherein the plurality of parts are provided with complementary male (20) and female connectors (21) to allow respective parts to be inter-connected.

3. The combined trough and walkway of any preceding claim wherein a base of the sub channels is sloped to allow water to drain towards an end of the first component.

4. The combined trough and walkway of any preceding claim wherein the first component is provided with male and female connectors to mate with respective complementary connectors on other said first components.

5. The combined trough and walkway of any preceding claim wherein the second component (100') comprises a plurality of angled support members (102), extending from a relatively thin portion towards an external edge of the second component to a relatively thick portion towards a centre of the second component, whereby the relatively thick portion sits, in use, on the generally upright member (12).

6. The combined trough and walkway of any preceding claim wherein the second component is provided with fastening means to securely attach it, in use, to the first component.

7. The combined trough and walkway of any preceding claim wherein the second component is provided with reflective means to render the walkway more visible under torchlit conditions.

## Patentansprüche

1. Kombination aus Kabelrinne und Gehweg (1), die Folgendes umfasst:
eine erste Komponente (10') zum Tragen von Kabeln, wobei die erste Komponente einen Kanal aufweist, der aus einer Basis und zwei üblicherweise aufrechten Seitenwänden (11) geformt ist, die sich an diese anschließen, wobei der Kanal durch ein üblicherweise aufrechtes Element (12), das sich an die Basis anschließt, in zwei Unterkanäle unterteilt ist; und
eine zweite Komponente (100') im Gebrauch angeordnet zum Bilden eines Deckel zum Abdecken der ersten Komponente und zum Bereitstellen eines Gehwegs, wobei das aufrechte Element (12) im Gebrauch so angeordnet ist, dass es die zweite Komponente (100') stützt, **dadurch gekennzeichnet, dass** die erste Komponente getrennte erste und zweite identische Seitenwandelemente (11) umfasst und ein aufrechtes Element (12), und dadurch, dass die ersten und zweiten Seitenwandelemente so angeordnet sind, dass sie vor Gebrauch zu beiden Seiten des aufrechten Elements angebracht werden können.

2. Kombination aus Kabelrinne und Gehweg nach einem der vorhergehenden Ansprüche, wobei die Vielzahl der Teile mit sich einander ergänzenden männlichen (20) und weiblichen Verbindern (21) ausgestattet ist, über die die entsprechenden Teile miteinander verbunden werden.

3. Kombination aus Kabelrinne und Gehweg nach einem der vorhergehenden Ansprüche, wobei eine Basis der Unterkanäle geneigt ist, damit Wasser zu einem Ende der ersten Komponente abfließen kann.

4. Kombination aus Kabelrinne und Gehweg nach einem der vorhergehenden Ansprüche, wobei die erste Komponente mit männlichen und weiblichen Verbindern ausgestattet ist, um sich mit den jeweiligen ergänzenden Verbindern an anderen ersten Komponenten verbinden zu können.

5. Kombination aus Kabelrinne und Gehweg nach einem der vorhergehenden Ansprüche, wobei die zweite Komponente (100') eine Vielzahl von abgewinkelten Stützelementen (102) umfasst, die sich von einem relativ dünnen Abschnitt in Richtung einer Außenkante der zweiten Komponente zu einem relativ dicken Abschnitt in Richtung einer Mitte der zweiten Komponente erstrecken, wobei der relativ dicke Abschnitt im Gebrauch auf dem üblicherweise aufrechten Element (12) sitzt.

6. Kombination aus Kabelrinne und Gehweg nach einem der vorhergehenden Ansprüche, wobei die zweite Komponente mit Befestigungsmitteln versehen ist, um sie im Gebrauch sicher an der ersten Komponente zu befestigen.

7. Kombination aus Kabelrinne und Gehweg nach einem der vorhergehenden Ansprüche, wobei die zweite Komponente mit reflektierenden Mitteln ausgestattet ist, um den Gehweg unter Taschenlampenbedingungen besser sichtbar zu machen.

## Revendications

1. Goulotte et trottoir combinés (1) comprenant:
un premier composant (10') destiné à porter des câbles, ledit premier composant comportant un canal formé à partir d'une base et deux parois latérales (11) globalement verticales s'étendant depuis la base, ledit canal étant divisé en deux sous-canaux par un élément généralement vertical (12) s'étendant à partir de la base; et
un second composant (100'), conçu en utilisation pour former un couvercle afin de protéger le premier composant et pour fournir un trottoir, l'élément vertical (12) étant conçu, en utilisation, pour supporter le second composant (100')
**caractérisés en ce que** le premier composant comprend des premier et second éléments de paroi latérale identiques séparés (11) et un élément vertical (12), et **caractérisés en ce que** les premier et second éléments de paroi latérale sont conçus pour être montés sur chaque côté de l'élément vertical avant utilisation.

2. Goulotte et trottoir combinés selon l'une quelconque des revendications précédentes, la pluralité de parties étant munies de connecteurs mâles (20) et femelles (21) complémentaires pour permettre aux parties respectives d'être interconnectées.

3. Goulotte et trottoir combinés selon l'une quelconque des revendications précédentes, une base des sous-canaux étant inclinée pour permettre à l'eau de s'écouler vers une extrémité du premier composant.

4. Goulotte et trottoir combinés selon l'une quelconque des revendications précédentes, le premier composant étant muni de connecteurs mâles et femelles pour s'accoupler avec des connecteurs complémentaires respectifs sur lesdits autres premiers composants.

5. Goulotte et trottoir combinés selon l'une quelconque des revendications précédentes, le second composant (100') comprenant une pluralité d'éléments de support inclinés (102), s'étendant d'une partie relativement mince vers un bord externe du second composant à une partie relativement épaisse vers un centre du second composant, la partie relativement épaisse reposant, en utilisation, sur l'élément généralement vertical (12).

6. Goulotte et trottoir combinés selon l'une quelconque des revendications précédentes, le second composant étant muni de moyens de fixation pour le fixer solidement, en cours d'utilisation, au premier composant.

7. Goulotte et trottoir combinés selon l'une quelconque des revendications précédentes, le second composant étant muni de moyens réfléchissants pour rendre le trottoir plus visible dans des conditions éclairées par une torche.
